# EUROPEAN PATENT APPLICATION

(11) **EP 4 715 881 A1**
(43) Date of publication of application: **25.03.2026**
(21) Application number: 24840150.7
(22) Date of filing: 14.03.2024
(51) Int. Cl.: H01M 4/04, F26B 13/14, F26B 25/06, F26B 25/20, B65H 23/038, B65H 20/02, B65H 27/00

(54) **DRYING CHAMBER DEVICE FOR PREVENTING MEANDERING OF ELECTRODE SHEET FOR SECONDARY BATTERY**

(30) Priority: 10.07.2023 KR 20230088957
(71) Applicant: People & Technology Inc., Gyeongsangbuk-do 39422 (KR)
(72) Inventor: KIM, Joonsup, Gumi-si Gyeongsangbuk-do 39422 (KR); YONG, Hyunho, Gumi-si Gyeongsangbuk-do 39353 (KR); CHUNG, Hyunsoo, Chilgok-gun Gyeongsangbuk-do 39843 (KR)
(74) Representative: BCKIP Part mbB
(86) International application number: PCT/KR2024/095524
(87) International publication number: WO 2025/014340

(57) **Abstract**

The present invention relates to a drying chamber device for preventing meandering of an electrode sheet for a secondary battery. The device dries an active material by heat, by applying the heat while allowing an electrode sheet to pass therethrough, the electrode sheet including a coated portion which is a region coated with an active material and an uncoated portion on which the active material is not coated. The device comprises: a drying case having an inlet part and an outlet part and allowing an electrode sheet to pass therethrough and providing a drying space; a plurality of transfer rolls arranged inside the drying case and transferring an electrode sheet having entered through the inlet part, to send the electrode sheet to the outlet part; a heating portion which dries the active material by applying heat to the electrode sheet passing through the drying case; and a plurality of meandering prevention rolls that are installed between the transfer rolls and prevent meandering of the electrode sheet by applying a pulling force to the uncoated portion of the electrode sheet. The drying chamber device for preventing meandering of an electrode sheet for a secondary battery according to the present invention configured as above prevents meandering of an electrode sheet passing through a drying case, thereby enabling uniform drying of an active material.

## Description

### [Technical Field]

The present invention relates to a chamber for drying an active material used in a secondary battery manufacturing process and, more particularly, to a drying chamber apparatus for preventing meandering of an electrode sheet for a secondary battery, which prevents meandering of an electrode sheet passing through a drying chamber so that drying nonuniformity does not occur, thereby providing favorable drying efficiency.

### [Background Art]

A secondary battery is a battery capable of performing repeated charging and discharging, and has a configuration in which ions in an electrolyte move between a positive electrode and a negative electrode insulated by a separator, thereby repeating charging and discharging.

In a secondary battery, electrodes, that is, a positive electrode and a negative electrode, have a stacked structure of a current collector and an electrode-material layer. The current collector is a sheet or a foil made of aluminum or copper, and the electrode-material layer is a laminated body in which an active material in a slurry form is applied to and cured on the current collector. The electrode-material layer is obtained by drying and curing the active material.

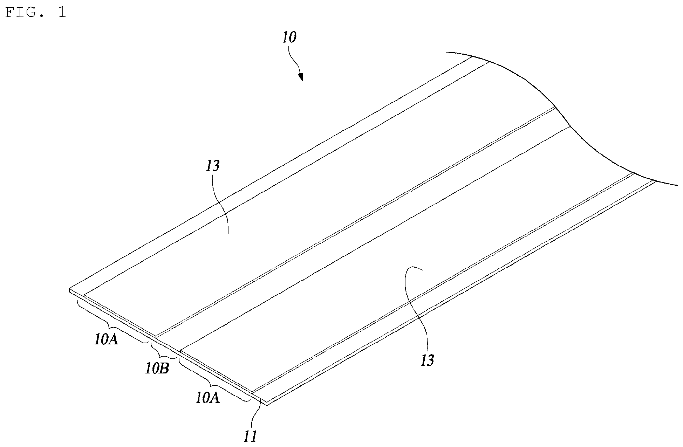

FIG. 1 is a perspective view showing a portion of a general electrode sheet for a secondary battery.

Referring to the drawing, an electrode-material layer 13 is stacked on a current-collector raw sheet 11 having a predetermined width. The electrode-material layer 13 is formed by heating and drying an applied active material. In the current-collector raw sheet 11, a region to which the electrode-material layer 13 is applied is a coated portion 10A, and a region to which the electrode-material layer 13 is not applied is an uncoated portion 10B.

Meanwhile, an electrode for a secondary battery is manufactured through a process in which an active material is applied to a current-collector raw sheet supplied continuously in a roll-to-roll manner, followed by magnetic alignment, drying, curing, cutting, and notching. During these multiple manufacturing steps, a drying chamber is used as equipment for drying the active material.

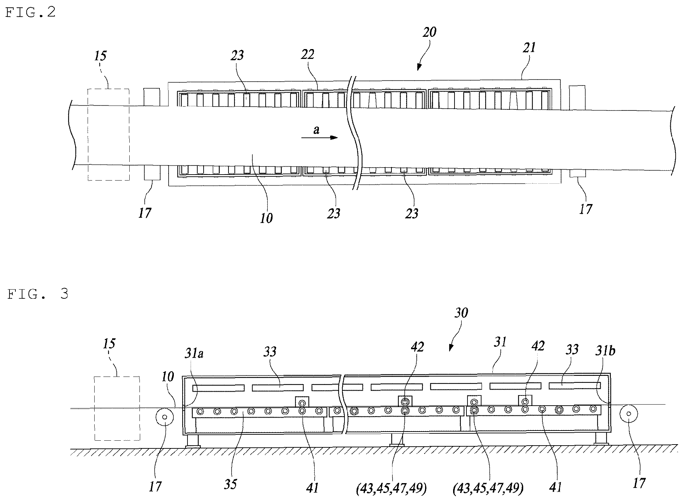

Magnetic alignment is a process that is performed before drying an active material in a secondary battery, and is a process of aligning magnetic particles in the active material in a specific direction. The purpose of performing magnetic alignment is to improve electrical conductivity and mechanical strength of an electrode. However, performing magnetic alignment may also cause an undesirable phenomenon, namely, meandering of an electrode sheet during transport, and a description thereof will be given later with reference to FIG. 2.

FIG. 2 is a schematic plan view showing a problem of a conventional chamber apparatus 20 for drying an electrode sheet.

As shown, the conventional chamber apparatus 20 includes a drying case 21, a roll frame 22, transport rolls 23, and a heating dryer (not shown).

The drying case 21 provides a drying space in which an electrode sheet 10 passing therethrough is dried. In addition, the roll frame 22 horizontally supports the plurality of transport rolls 23 inside the drying case 21. The transport rolls 23 transport the electrode sheet 10 in a state of being rotatably supported by the roll frame 22. The electrode sheet 10 aligned by a separate alignment device 15 is transported in a direction indicated by arrow a while being supported on the transport rolls 23. The heating dryer is located above the transport rolls 23 and heats and dries an active material of the electrode sheet during transport.

However, the conventional chamber apparatus 20 described above has a problem in that the electrode sheet 10 meanders while moving in the direction indicated by arrow a. That is, rather than traveling linearly along the transport rolls, the electrode sheet 10 is gradually displaced toward one side in a width direction during transport. This occurs due to magnetic force of the magnetically aligned active material. That is, the electrode sheet is pulled toward metallic members on an inner wall of the drying case 21. Meandering of the electrode sheet 10 interferes with normal drying of the active material and causes defects in the secondary battery.

A meandering-prevention means is required to efficiently dry an active material stacked on a current-collector raw sheet and aligned.

A background technology related to meandering of an electrode sheet is disclosed in Korean Patent Registration No. 10-2330719 (APPARATUS FOR PROCESSING ELECTRODE SHEET FOR SECONDARY BATTERY USING LASER AND VISION).

The disclosed processing apparatus includes a transport unit configured to unwind a wound electrode sheet and to continuously transport the electrode sheet, a vision unit including at least one camera configured to photograph at least one of both edge portions in the width direction of the electrode sheet to provide, in real time, meandering information indicating a meandering state of the electrode sheet that is transported, a measurement unit configured to measure a transport distance of the electrode sheet and to provide transport-distance information in real time, a controller configured to identify a location of a predetermined processing region of the electrode sheet based on the transport-distance information provided in real time from the measurement unit, to identify a meandering state of the electrode sheet based on the meandering information provided in real time from the vision unit, and to provide processing information including a laser-irradiation timing, a laser-irradiation position, and a laser-irradiation angle for a processing region generated or corrected in response to the meandering state of the electrode sheet, and at least one laser cutter or knife cutter configured to receive the processing information provided from the controller and to perform laser cutting on the processing region of the electrode sheet based on the processing information.

### [Disclosure]

### [Technical Problem]

The present invention has been made to solve the above problems, and it is an object of the present invention to provide a drying chamber apparatus for preventing meandering of an electrode sheet for a secondary battery, which prevents meandering of an electrode sheet passing through a drying case, thereby enabling uniform drying of an active material.

### [Technical Solution]

A drying chamber apparatus for preventing meandering of an electrode sheet for a secondary battery of the present invention for accomplishing the above object is configured to apply heat to an electrode sheet having a coated portion coated with an active material and an uncoated portion excluding the active material while the electrode sheet passes through the drying chamber apparatus, so that the active material is dried by heat, the drying chamber apparatus including a drying case having an inlet and an outlet to allow passage of the electrode sheet, the drying case providing a drying space, a plurality of transport rolls disposed in the drying case, the plurality of transport rolls being configured to transport the electrode sheet entering through the inlet and to discharge the electrode sheet through the outlet, a heating unit configured to apply heat to the electrode sheet passing through the drying case to dry the active material, and a plurality of meandering-prevention rolls mounted between the transport rolls, the plurality of meandering-prevention rolls being configured to apply traction force to the uncoated portion of the electrode sheet to prevent meandering of the electrode sheet.

In addition, the meandering-prevention rolls are crown rolls having portions contacting the uncoated portion and having a larger diameter than other portions of the meandering-prevention rolls.

In addition, the transport rolls include mat rolls having a predetermined diameter and fine surface irregularities formed on outer circumferential surfaces of the mat rolls.

In addition, pressing portions, which press the electrode sheet toward the crown rolls to prevent slipping of the crown rolls with respect to the uncoated portion, are further provided above the crown rolls.

In addition, the meandering-prevention rolls are mounted in a latter half of an electrode-sheet transport path inside the drying case in greater numbers than in a former half.

In addition, the meandering-prevention rolls include support-surface portions configured to support the coated portion of the electrode sheet and slip-prevention surface portions integral with the support-surface portions, the slip-prevention surface portions being configured to support the uncoated portion and having higher surface roughness than the support-surface portions.

In addition, the meandering-prevention rolls include support-surface portions configured to contact the coated portion of the electrode sheet and friction rings configured to support the uncoated portion and having a larger diameter than the support-surface portions.

### [Advantageous Effects]

The drying chamber apparatus for preventing meandering of an electrode sheet for a secondary battery according to the present invention configured as described above prevents meandering of an electrode sheet passing through a drying case, thereby enabling uniform drying of an active material.

### [Description of Drawings]

FIG. 1 is a perspective view showing a portion of a general electrode sheet for a secondary battery.
FIG. 2 is a plan view showing a problem of a conventional chamber apparatus for drying an electrode sheet.
FIG. 3 is a side view showing an overall configuration of a drying chamber apparatus for preventing meandering of an electrode sheet according to an embodiment of the present invention.
FIG. 4 is a view separately showing the mat roll shown in FIG. 3.
FIG. 5 is a view showing a structure and an operating principle of the meandering-prevention roll shown in FIG. 3.
FIGs. 6 and 7 are views showing a configuration in which a pressing roll is disposed above the meandering-prevention roll shown in FIG. 5.
FIGs. 8 to 10 are views showing modified examples of the meandering-prevention roll applicable to the drying chamber apparatus according to the embodiment of the present invention.

### [Best Mode]

Hereinafter, an embodiment of the present invention will be described in detail with reference to the accompanying drawings.

FIG. 3 is a side view showing an overall configuration of a drying chamber apparatus 30 for preventing meandering of an electrode sheet according to an embodiment of the present invention.

As shown, the drying chamber apparatus 30 according to the embodiment includes a drying case 31, a heating unit, a roll frame 35, transport rolls 41, meandering-prevention rolls 43, 45, 47, and 49, and pressing rolls 42.

The drying case 31 is a structure that allows an electrode sheet 10 to pass through an inside of the drying case 31 and includes an inlet 31a and an outlet 31b. The electrode sheet 10 having a predetermined width and extending continuously in a longitudinal direction enters a drying space 31d in the drying case 31 through the inlet 31a and exits through the outlet 31b. The size and configuration of the drying case 31 are identical to those of a general drying chamber.

Reference numeral 17 denotes guide rolls. The guide rolls 17 support the electrode sheet 10 entering the drying case 31 and also support the electrode sheet 10 exiting the drying case 31.

The electrode sheet 10 entering the drying case 31 through the inlet 31a includes a current-collector raw sheet 11 having a predetermined width and an active-material layer applied to the current-collector raw sheet 11, as shown in FIG. 1. The active-material layer is heated and dried while passing through the drying case 31 and becomes an electrode-material layer 13. In addition, a region to which the active-material layer is applied is a coated portion 10A, and a region to which the active-material layer is not applied is an uncoated portion 10B.

The heating unit is a heating dryer 33 mounted in an upper region inside the drying case 31 and configured to heat and dry an active material of the electrode sheet passing through the drying space 31d. The heating dryer 33 outputs radiant heat of 100°C to 170°C. The type of the heating dryer 33 may vary and may be, for example, a halogen lamp.

The roll frame 35 is a structure disposed horizontally below the heating dryer 33 and rotatably supports the transport rolls 41, the meandering-prevention rolls 43, 45, 47, and 49, and the pressing rolls 42.

The transport rolls 41 are arranged in parallel, each having both end portions rotatably supported by the roll frame, and provide a transport path of the electrode sheet 10. The electrode sheet 10 passes through the drying space 31d and exits through the outlet 31b in a state of being supported on the transport rolls 41.

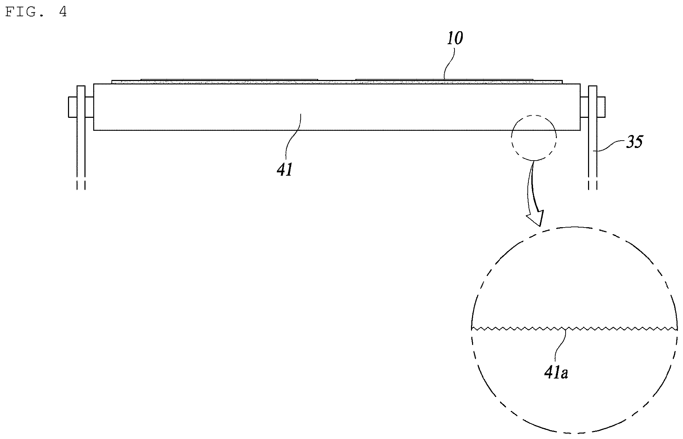

In particular, some or all of the transport rolls 41 may have fine surface irregularities 41a formed on outer circumferential surfaces thereof, as shown in FIG. 4. The fine surface irregularities 41a serve to prevent slipping of the current-collector raw sheet 11 constituting the electrode sheet. A maximum height of peaks forming the fine surface irregularities is equal to or less than one tenth of the thickness of the current-collector raw sheet 11.

The meandering-prevention rolls 43, 45, 47, and 49 are mounted between the transport rolls 41 and serve to apply traction force to the uncoated portion 10B of the electrode sheet 10 to prevent meandering of the electrode sheet. While the transport rolls 41 apply traction force to both the uncoated portion 10B and the coated portion 10A, the meandering-prevention rolls apply traction force intensively only to the uncoated portion 10B. A total amount of traction force applied by the transport rolls or the meandering-prevention rolls is constant.

For example, when traction force is set to 100, force of 100 is evenly distributed in a width direction on the electrode sheet 10 transported by the transport rolls 41, whereas force of 100 is applied only to the uncoated portion 10B of the electrode sheet 10 transported by the meandering-prevention rolls. That is, only the uncoated portion 10B located at a center of the electrode sheet 10 is pulled. The configuration of the meandering-prevention rolls may vary, as long as the meandering-prevention rolls are capable of serving the above role.

When considering only a moment at which the electrode sheet 10 passes over the meandering-prevention rolls, portions of the electrode sheet 10 other than the uncoated portion 10B are in a suspended state, and traction force, that is, transport force, is applied only to the uncoated portion 10B. Accordingly, the electrode sheet 10 is transported only in a direction guided by the meandering-prevention rolls.

All of the transport rolls 41 may be replaced with the meandering-prevention rolls 43, 45, 47, and 49. In such a case, however, both end portions of the electrode sheet 10 in the width direction may sag downward due to gravity. Therefore, one meandering-prevention roll may be provided per N transport rolls, and N may be 10 to 15.

Furthermore, the meandering-prevention rolls are mounted in a latter half of the electrode-sheet transport path inside the drying case 31 in greater numbers than in a former half. The former half is a region corresponding to a half of a distance from the inlet 31a to the outlet 31b. In addition, the latter half is a region from an endpoint of the former half to the outlet 31b.

From among the meandering-prevention rolls, 3% to 10% may be disposed in the former half, and 90% to 97% may be disposed in the latter half. In addition, in the latter half, the meandering-prevention rolls are disposed at increasingly shorter intervals toward the outlet 31b.

The pressing rolls 42 are pressing portions that are mounted horizontally above some of the meandering-prevention rolls 43, 45, 47, and 49 and press the electrode sheet 10 downward while the electrode sheet 10 passes over the meandering-prevention rolls, thereby preventing slipping of the meandering-prevention rolls with respect to the uncoated portion. The shape of the pressing rolls may be implemented in various forms, and a description thereof will be given later. Furthermore, the pressing rolls 42 may additionally be mounted above some of the transport rolls 41.

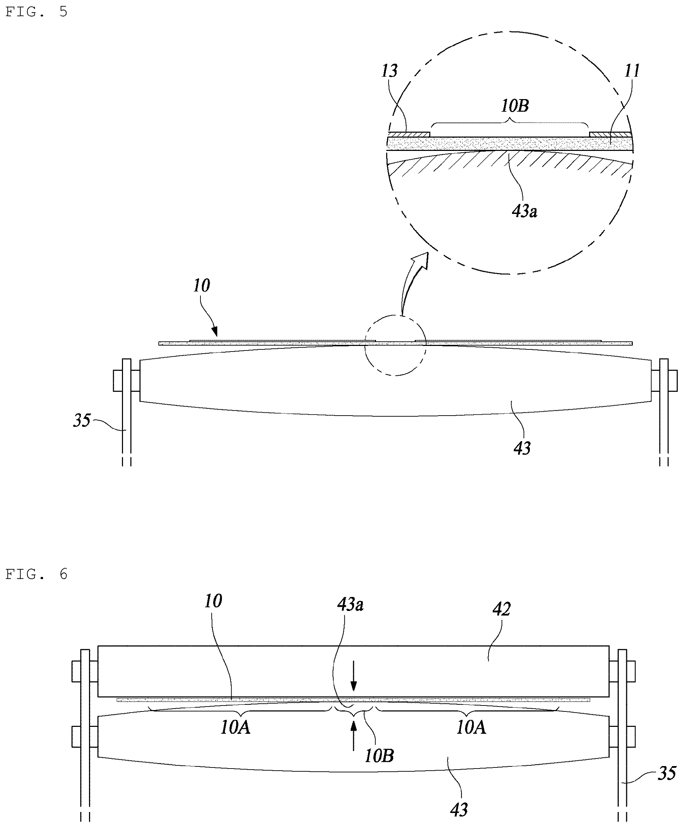

FIG. 5 is a view showing an example of the meandering-prevention rolls shown in FIG. 3.

The meandering-prevention roll 43 shown in FIG. 5 is a crown roll having a shape in which the diameter of a central portion thereof in the longitudinal direction, that is, the diameter of a portion contacting the uncoated portion 10B, is greater than the diameters of other portions.

The meandering-prevention roll 43 is in point contact with the uncoated portion 10B. A point-contact portion is a traction portion 43a that provides traction force to the electrode sheet 10. The electrode sheet 10 does not meander even though the active material is aligned, because a central portion of the electrode sheet, that is, the uncoated portion 10B, is pulled by the traction portion 43a.

In the drawings illustrating the embodiment, the diameter of the traction portion 43a of the meandering-prevention roll 43 is depicted to be significantly larger than the diameters of other portions so that the difference is visually distinguishable. However, in an actual apparatus, the diameter of the traction portion 43a is larger than the diameters of the other portions only to an extent that is not visually recognizable. The difference between the diameter of the traction portion 43a of the meandering-prevention roll 43 and the diameter of a minimum-diameter portion is equal to or less than the thickness of the electrode sheet 10.

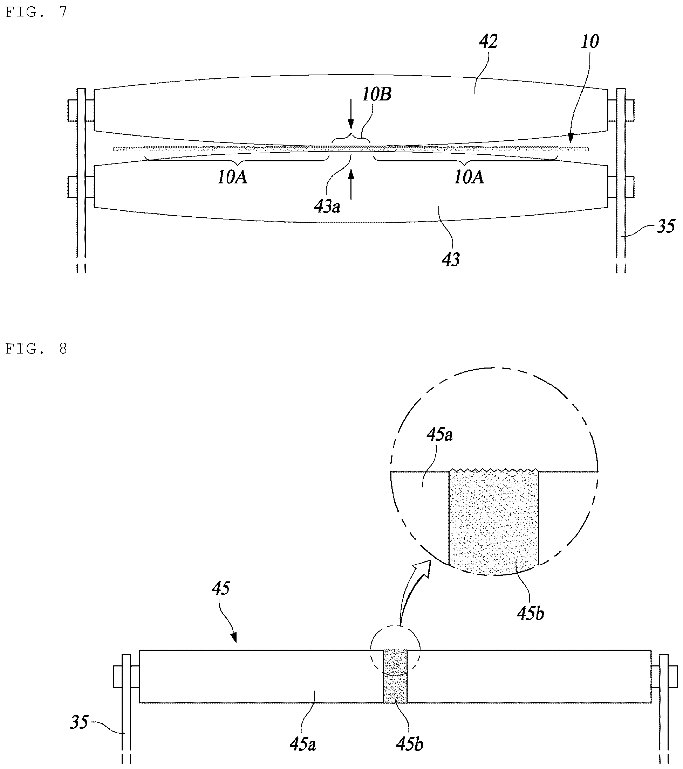

FIGs. 6 and 7 are views showing a configuration in which the pressing roll 42 is disposed above the meandering-prevention roll shown in FIG. 5.

The pressing roll 42 shown in FIG. 6 is a flat roller having a predetermined outer diameter and presses the electrode sheet 10 downward. As the electrode sheet 10 is pressed downward, a lower surface of the uncoated portion 10B comes into stronger contact with the traction portion 43a of the meandering-prevention roll 43. When the pressing roll 42 is employed, the number of meandering-prevention rolls 43 may be reduced.

In addition, the pressing roll 42 shown in FIG. 7 has the same shape as the meandering-prevention roll 43 disposed thereunder. That is, the pressing roll 42 is a crown roll. A maximum-diameter portion of the pressing roll 42 is positioned above a maximum-diameter portion of the meandering-prevention roll 43 in a vertical direction. The pressing roll 42 presses the central portion of the uncoated portion 10B of the electrode sheet 10 downward so that the uncoated portion 10B is brought into strong contact with the traction portion 43a of the meandering-prevention roll 43.

FIGs. 8 to 10 are views showing modified examples of the meandering-prevention roll applicable to the drying chamber apparatus according to the embodiment of the present invention.

The meandering-prevention roll 45 shown in FIG. 8 includes a support-surface portion 45a and a slip-prevention surface portion 45b.

The support-surface portion 45a is a portion that supports the coated portion 10A of the electrode sheet 10 and has the same diameter as the transport roll 41. In addition, the slip-prevention surface portion 45b is positioned at the central portion of the meandering-prevention roll 45 and supports the uncoated portion of the electrode sheet 10. The slip-prevention surface portion 45b is a portion having fine surface irregularities and has higher surface roughness than the support-surface portion 45a. The slip-prevention surface portion 45b contacts the uncoated portion 10B of the electrode sheet 10 and serves as a traction portion that applies traction force to the uncoated portion.

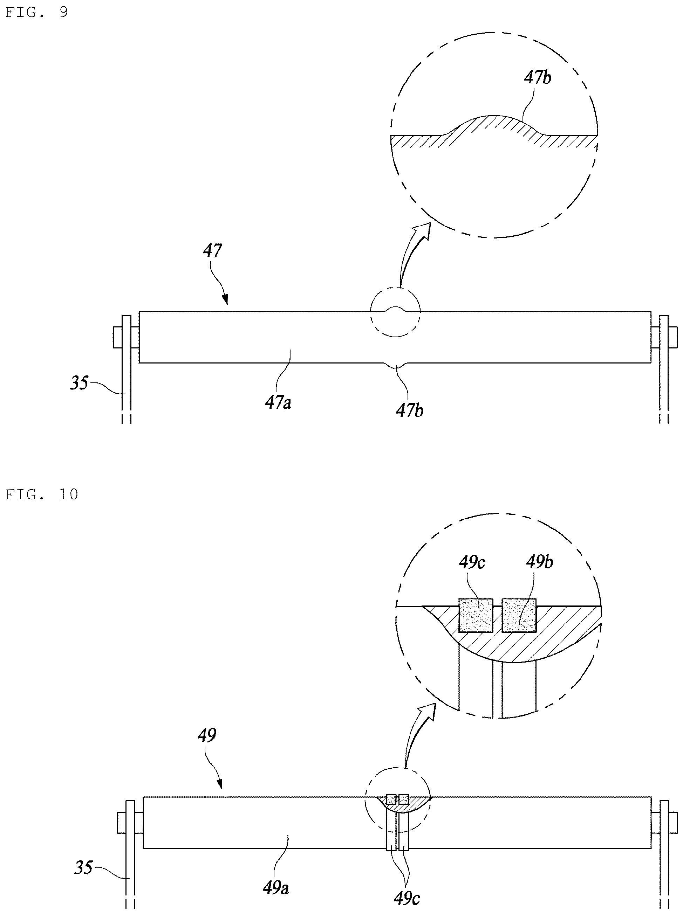

The meandering-prevention roll 47 shown in FIG. 9 includes a support-surface portion 47a having a predetermined diameter and a protruding portion 47b formed at the central portion of the meandering-prevention roll 47 in the longitudinal direction. The protruding portion 47b is a portion having a larger diameter than the support-surface portion 47a. In FIG. 9, for convenience of description, the protruding portion 47b is illustrated as protruding from the meandering-prevention roll 47 to a visually distinguishable extent. However, in practice, the protruding portion 47b is not visually distinguishable. A protruding height of the protruding portion 47b from the support-surface portion 47a is equal to or less than one fifth of the thickness of the current-collector raw sheet 11.

Meanwhile, the meandering-prevention roll 49 shown in FIG. 10 includes a support-surface portion 49a having a predetermined diameter and two friction rings 49c provided at the central portion of the meandering-prevention roll 49. The support-surface portion 49a supports a lower surface of the coated portion 10A. In addition, the friction rings 49c are ring-shaped members made of rubber and are detachably fitted into center holes 49b. The friction rings 49c have a larger outer diameter than the support-surface portion 49a.

In order to allow the friction rings 49c to be mounted on the meandering-prevention roll 49, the center grooves 49b are formed in an outer circumferential surface of the central portion of the meandering-prevention roll 49. The center grooves 49b are grooves having a predetermined width and a predetermined depth. The friction rings 49c come into close contact with a lower surface of the uncoated portion 10B in a state of being fitted into the center holes 49b. The friction rings 49c serve as traction portions that apply traction force to the uncoated portion 10B during rotation of the meandering-prevention roll 49.

The pressing roll 42 described above may also be mounted above the meandering-prevention roll shown in FIGs. 8 to 10.

As a result, the drying chamber apparatus 30 of the embodiment configured as described above employs the meandering-prevention rolls between the transport rollers that transport the electrode sheet 10, thereby preventing meandering of the electrode sheet caused by magnetic force of the electrode sheet.

Although the present invention has been described above in detail with reference to a specific embodiment, the present invention is not limited to the above embodiment, and it is to be understood that various modifications can be made by those skilled in the art without departing from the technical idea of the present invention.

### [Industrial Applicability]

The present invention is industrially applicable because the present invention prevents meandering of an electrode sheet passing through a drying case and enables uniform drying of an active material.

## Claims

1. A drying chamber apparatus for preventing meandering of an electrode sheet for a secondary battery, the drying chamber apparatus being configured to apply heat to an electrode sheet having a coated portion coated with an active material and an uncoated portion excluding the active material while the electrode sheet passes through the drying chamber apparatus, so that the active material is dried by heat, the drying chamber apparatus comprising:
a drying case having an inlet and an outlet to allow passage of the electrode sheet, the drying case providing a drying space;
a plurality of transport rolls disposed in the drying case, the plurality of transport rolls being configured to transport the electrode sheet entering through the inlet and to discharge the electrode sheet through the outlet;
a heating unit configured to apply heat to the electrode sheet passing through the drying case to dry the active material; and
a plurality of meandering-prevention rolls mounted between the transport rolls, the plurality of meandering-prevention rolls being configured to apply traction force to the uncoated portion of the electrode sheet to prevent meandering of the electrode sheet.

2. The drying chamber apparatus according to claim 1, wherein the meandering-prevention rolls are crown rolls having portions contacting the uncoated portion, the portions having a larger diameter than other portions of the meandering-prevention rolls.

3. The drying chamber apparatus according to claim 2, wherein the transport rolls comprise mat rolls having a predetermined diameter and fine surface irregularities formed on outer circumferential surfaces of the mat rolls.

4. The drying chamber apparatus according to claim 2, further comprising pressing portions mounted above the crown rolls, the pressing portions being configured to press the electrode sheet toward the crown rolls to prevent slipping of the crown rolls with respect to the uncoated portion.

5. The drying chamber apparatus according to claim 1, wherein the meandering-prevention rolls are mounted in a latter half of an electrode-sheet transport path inside the drying case in greater numbers than in a former half.

6. The drying chamber apparatus according to claim 1, wherein the meandering-prevention rolls comprise:
support-surface portions configured to support the coated portion of the electrode sheet; and
slip-prevention surface portions integral with the support-surface portions, the slip-prevention surface portions being configured to support the uncoated portion, the slip-prevention surface portions having higher surface roughness than the support-surface portions.

7. The drying chamber apparatus according to claim 1, wherein the meandering-prevention rolls comprise:
support-surface portions configured to contact the coated portion of the electrode sheet; and
friction rings configured to support the uncoated portion, the friction rings having a larger diameter than the support-surface portions.
